(19) **Europäisches Patentamt**
**European Patent Office**
**Office européen des brevets**

(11) Veröffentlichungsnummer: **0 003 971**
**B1**

(12) **EUROPÄISCHE PATENTSCHRIFT**

(45) Veröffentlichungstag der Patentschrift: **01.04.81**

(51) Int. Cl.³: **C 08 L 1/10, G 02 C 7/04**

(21) Anmeldenummer: **79100388.2**

(22) Anmeldetag: **12.02.79**

(54) Kontaktlinsen aus Mischungen aus Celluloseestern und Ethylen-Vinylacetat-Copolymeren.

(30) Priorität: **23.02.78 DE 2807663**

(43) Veröffentlichungstag der Anmeldung:
**19.09.79 Patentblatt 79/19**

(45) Bekanntmachung des Hinweises auf die Patenterteilung:
**01.04.81 Patentblatt 81/13**

(84) Benannte Vertragsstaaten:
**BE CH DE FR GB IT NL**

(56) Entgegenhaltungen:
**DE - A - 2 426 178**
**US - A - 3 682 860**
**US - A - 4 116 549**

(73) Patentinhaber: **BAYER AG**
**Zentralbereich Patente, Marken und Lizenzen**
**D-5090 Leverkusen 1, Bayerwerk (DE)**

(72) Erfinder: **Wingler, Frank, Dr.**
**Walter-Flex-Strasse 17**
**D-5090 Leverkusen (DE)**
Erfinder: **Eicher, Theobald, Dr.**
**Eschenweg 5**
**D-4047 Dormagen 1 (DE)**
Erfinder: **Müller, Friedemann, Dr.**
**Hardenbergstrasse 13**
**D-4040 Neuss 24 Allerheiligen (DE)**
Erfinder: **Fischer, Winfried, Dr.**
**An der Joch 36**
**D-5000 Köln 80 (DE)**
Erfinder: **Prinz, Richard, Dr.**
**Bamberger Strasse 12**
**D-5090 Leverkusen 1 (DE)**
Erfinder: **Geyer, Otto-Christian, Dr.**
**Bahnhofstr.12**
**6330 Wet:lar (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Kontaktlinsen aus Mischungen aus Celluloseestern und Ethylen-Vinylacetat-Copolymeren

Die Erfindung betrifft Augen-Kontaktlinsen und -Kontaktschalen aus speziellen Polymermischungen aus Celluloseestern und Ethylen-Vinylacetat-Copolymeren.

In der Kontakt-Augenoptik werden bereits eine Reihe von verschiedenen Polymeren eingesetzt. Die Materialien sitzen unmittelbar auf der Hornhaut und beeinflussen daher wesentlich die Stoffwechselvorgänge sowie den Sauerstoffhaushalt. Durch den Kontakt können Reizeinwirkungen der Materialien direkt auf das Auge erfolgen.

Kontaktlinsen werden im allgemeinen in zwei Haupttypen eingeteilt, nämlich in harte Linsen und in hydrophile weiche Linsen. Linsen der ersten Art sind schon seit vielen Jahren bekannt und werden üblicherweise aus Polymethylmethacrylat hergestellt, das geschnitten und poliert werden kann, wodurch Linsen mit guten optischen Eigenschaften erhalten werden. Harte Polymethylmethacrylat-Linsen haben jedoch den bekannten Nachteil, daß sie die Hornhaut und das Innere des Augenlides reizen. Wenn ein Patient harte Linsen tragen soll, dann erfordert dies daher eine erhebliche Eingewöhnungszeit, während der der Patient die Linsen in allmählich zunehmenden Zeiträumen trägt, bis zu einem Maximum von einem etwa achtstündigen kontinuierlichen Tragen. Aufgrund dieses Mangels der harten Linsen werden sie nur von einem geringen Teil von Brillenträgern angewendet.

In den letzten Jahren sind nun weiche Kontaktlinsen eingeführt worden, die aus Hydrogelen von hydrophilen Polymeren bestehen. Durch sie konnte das Problem der Augenreizung zum großen Teil überwunden werden, so daß die Patienten sich nunmehr an das Tragen von Kontaktlinsen viel rascher anpaßten. Die herkömmlichen weichen Linsen haben jedoch — genauso wie die harten Kontaktlinsen — einen weiteren schwerwiegenden Nachteil, wie der Fachwelt bekannt ist. Dieser Nachteil besteht darin, daß beide Linsentypen nicht dazu imstande sind, der Hornhaut genügend Sauerstoff zuzuführen, damit ihre normale Stoffwechselgeschwindigkeit aufrechterhalten wird. Die Hornhautoberfläche muß nämlich eine angemessene Sauerstoffzuführung erhalten, damit die Hornhaut transparent und gesund bleibt. Es hat sich gezeigt, daß zur Vermeidung von histologisch erfaßbaren Veränderungen in dem Hornhautepithel in der Nachbarschaft der Hornhaut eine Minimalatmosphäre von 5% Sauerstoffequivalent aufrechterhalten werden muß (vgl. American Journal of Optometry 49 (4), 1972, S. 329—332). Eine Atmosphäre von 5% Sauerstoffequivalent wird einer gasförmigen Atmosphäre als equivalent definiert, welche 5 Vol-% Sauerstoff und 95 Vol-% Stickstoff enthält. Die normale Atmosphäre besitzt nach dieser Definition ein Sauerstoffatmosphärenequivalent von 21%.

Die herkömmlichen harten Kontaktlinsen auf Basis von Polymethylmethacrylat sind gegenüber Sauerstoff praktisch undurchlässig und die Linse ist, um eine rasche Asphyxie der Hornhaut zu vermeiden, mit einem nach oben gedrehten Rand versehen, damit während des Blinzelns des Auges Tränen über die Oberfläche der Hornhaut geleitet werden. Auf diese Weise nimmt zwar die Hornhaut Sauerstoff aus der Tränenflüssigkeit auf, doch fällt trotzdem die Sauerstoffkonzentration kontinuierlich während des Gebrauchs in einem solchen Ausmaß ab, daß ein ausgedehntes Tragen über einen Zeitraum von wesentlich mehr als 8 bis 10 Stunden das Sehvermögen beeinträchtigt.

Hydrophile weiche Kontaktlinsen lassen, obgleich sie gegenüber Sauerstoff bis zu einem gewissen Ausmaß permeabel sind, Sauerstoff nicht mit genügender Geschwindigkeit durch, um die Hornhaut in gesundem Zustand zu erhalten. Daher sind weiche Linsen so gestaltet worden, daß die Linse, wenn sie sich in ihrer mittleren Stellung auf dem Augapfel befindet, die Oberfläche im wesentlichen in der ringförmigen Randgegend zwischen der Hornhaut und der Lederhaut berührt, während der Hauptteil der Linse auf einem Kissen aus Tränenflüssigkeit aufliegt. Die normalen Blinzelbewegungen des Auges bewirken nun ein Abbiegen der Linse, was als Miniaturdiaphragma wirkt und Tränenflüssigkeit über die Hornhaut pumpt. Solche Gestaltungsmaßnahmen sind jedoch nicht vollständig wirksam, um eine ausreichende Sauerstoffzuführung für die Hornhaut aufrechtzuerhalten, so daß der Zeitraum eines angenehmen kontinuierlichen Tragens über etwa 10 Stunden hinaus nicht signifikant verlängert wird und danach eine Unterbrechung der Sicht-Korrektur erforderlich ist.

Weiche, hydrophile Linsenmaterialien auf Basis von Hydroxyethylmethacrylat und/oder Vinylpyrrolidon besitzen aufgrund ihrer Hydrophilie zwar anfänglich einen größeren Tragekomfort als harte Linsen, haben aber den enormen Nachteil, daß sich in ihnen Stoffwechselprodukte ablagern, Bakterien, Sporen oder Pilze eindringen und somit eine Infektion des Auges hervorrufen können. In jüngster Zeit sind sogar einige Fälle von Spätschäden durch weiche hydrophile Kontaktlinsen bekannt geworden. Auch bei Verwendung von nichthydrophilen Materialien, wie z.B. von Silicongummi (US—Patent 3 996 189) traten in einigen Fällen Augenschäden auf, die ihre Ursache in auswandernden chemischen Bestandteilen haben können.

In der US—Patentschrift 3 900 250 wird die Verwendung von Celluloseacetobutyraten vorgeschlagen. Celluloseacetobutyrate besitzen eine hornartige Oberfläche, eine geringe Hydrophilie und eine erhöhte Sauerstoffdurchlässigkeit. Celluloseacetobutyrat ist jedoch ein Werkstoff, der ohne Zusatz von Verarbeitungshilfsmitteln und Weichmachern thermoplastisch praktisch nicht verarbeitbar ist.

Formmassen aus Celluloseacetat können ohne Zusatz von niedermolekularen Weichmachern ebenfalls praktisch nicht thermoplastisch verarbeitet werden, da sich dieser Ester vor dem Erweichen zu zersetzen beginnt. Auch bei Celluloseacetopropionaten und -acetobutyraten liegen Erweichungs- und Zersetzungstemperatur ziemlich nahe beieinander, so daß diese Formmassen für ihre thermoplastische Verarbeitung mit Weichmachern plastifiziert werden müssen. Damit erreicht man die notwendige Herabsetzung der Verarbeitungstemperatur und Verarbeitungsviskosität.

Die drei Hydroxylgruppen der Anhydroglucose-Einheiten der Cellulose können prinzipiell mit einer Vielzahl von organischen Säuren verestert werden, wovon aber nur Celluloseacetate, -acetopropionate und -acetobutyrate besondere technische Bedeutung erlangt haben. Aus diesen Estern werden thermoplastisch verarbeitbare Formmassen sowie z.B. Acetatseide, Blockacetat, Folienträger für Sicherheitsfilme, Elektroisolierfolien und Lacke hergestellt.

Als Weichmacher für organische Celluloseester dienen vornehmlich aliphatische Ester der Phthalsäure, Adipinsäure, Azelainsäure, Sebacinsäure und Phosphorsäure wie beispielsweise Dimethylphthalat, Diethylphthalat, Dibutyladipat, Dioctyladipat, Dibutylazelat und Tributylphosphat. Oft ist es auch vorteilhaft, Weichmachergemische einzusetzen. Die bekannten kontaktoptischen Materialien aus Celluloseacetobutyrat enthalten zu ihrer besseren Verarbeitbarkeit Verarbeitungshilfsmittel auf Basis von Phthalaten, Azelainsäure- und Sebacinsäureestern. Die Verwendung derartiger Materialien hat jedoch den Nachteil, daß die Weichmacher und Verarbeitungshilfsmittel im Laufe der Zeit auswandern und Spätschäden am Auge hervorrufen können.

Vorteilhaft wäre daher die Verwendung von polymeren Materialien, die keine Reizerscheinungen verursachen, chemisch indifferent sind, einen hohen Tragekomfort besitzen, eine erhöhte Sauerstoffdurchlässigkeit aufweisen und keine Bakterien oder Pilze aufnehmen.

Überraschenderweise werden diese physiologisch wichtigen Anforderungen von thermoplastischen Formmassen erfüllt, wie sie aus der DE—OS 24 26 178 bekannt sind. Die dort beschriebenen Formmassen besthen, vorzugsweise, aus 70—95 Gew.-% mindestens eines Celluloseesters einer aliphatischen Säure, 5—30 Gew.-% eines Ethylen-Vinylacetat-Copolymerisats mit 30—98 Gew.-% eingebautem Vinylacetat und können ggf. 0—20 Gew.-% eines niedermolekularen Weichmachers enthalten. Die Formmassen sind transparent und besitzen sehr gute mechanische Eigenschaften, insbesondere verbesserte Kerbschlagzähigkeit und Formbeständigkeit in der Wärme. Sie können z.B. zur Herstellung von Außenverkleidungen, Formkörpern und Folien eingesetzt werden.

Es wurde nun gefunden, daß man kontaktoptische Materialien mit einer ausgezeichneten Verträglichkeit und einer hohen Sauerstoffdurchlässigkeit erhält, wenn man als lichtbrechendes Material Polymerischungen aus Celluloseestern von aliphatischen Carbonsäuren und Ethylen-Vinylacetat-Copolymeren verwendet. Außerdem haben diese Mischungen den Vorteil, frei von Weichmachern und Verarbeitungsstabilisatoren zu sein, da bei ihrer thermoplastischen Verarbeitung derartige Zusätze nicht erforderlich sind.

Gegenstand der vorliegenden Erfindung sind Kontaktlinsen und Kontaktschalen aus lichtbrechendem Material aus Mischungen bestehend aus

1) 99 bis 70 Gewichtsprozent eines Celluloseesters von einer oder mehr aliphatischen Carbonsäuren und

2) 1 bis 30 Gewichtsprozent eines Ethylen-Vinylacetat-Copolymerisates mit 30 bis 98 Gew.-% eingebautem Vinylacetat.

Geeignete Celluloseester zur Herstellung der erfindungsgemäßen lichtbrechenden Materialien sind Celluloseester aliphatischer Carbonsäuren mit 1—5 C-Atomen, vorzugsweise Celluloseacetat, -acetopropionat und -acetobutyrat.

Die Verfahren zur Herstellung von organischen Celluloseestern sind seit langem bekannt und werden beispielsweise in Ullmanns Enzyklopädie der technischen Chemie (Verlag Urban u. Schwarzenberg, München-Berlin, 1963) im 5. Band auf S. 182—201 beschrieben.

Geeignete Celluloseacetobutyrate enthalten. in allgemeinen

40 bis 50 Gew.-% Buttersäure,

15 bis 26 Gew.-% Essigsäure und

0,75 bis 1,95 Gew.-% Hydroxylgruppen

Bevorzugt ist die Verwendung von Celluloseacetobutyraten mit folgender Zusammensetzung:

42 bis 46 Gew.-% Buttersäure,

18 bis 21 Gew.-% Essigsäure und

1,0 bis 1,7 Gew.-% Hydroxylgruppen.

Geeignete Celluloseacetopropionate enthalten im allgemeinen

50 bis 63,5 Gew.-% Propionsäure,

1 bis 12 Gew.-% Essigsäure und

1,2 bis 1,95 Gew.-% Hydroxylgruppen.

Bevorzugt zu verwendende Celluloseacetopropionate haben folgende Zusammensetzung:

54 bis 58 Gew.-% Propionsäure,

5 bis 8 Gew.-% Essigsäure und

1,5 bis 1,8 Gew.-% Hydroxylgruppen.

Bevorzugt werden Mischungen mit Celluloseacetobutyraten verwendet.

Die relativen Viskositäten ($\eta_{rel}$) von 2%igen Lösungen der verwendeten aliphatischen Celluloseester in Aceton liegen bei 25°C zwischen 3,5 und 5,0, bevorzugt zwischen 4,0 und 4,5.

Die Ethylen-Vinylacetat-Copolymerisate werden nach den bekannten Verfahren der Hoch- und Mitteldrucksynthese, gegebenenfalls in Lösungsmitteln wie tert.-Butanol, hergestellt. Sie haben einen Vinylacetatgehalt von 30—98 Gew.-%, vorzugsweise von 60—80 Gew.-%.

Die nach dem Verfahren der Hochdrucksynthese hergestellten Ethylen-Vinylacetat-Copolymerisate besitzen Schmelzindexwerte — nach DIN 53 735 bei 190°C und einer Belastung von 21.18N (2,16 kp) — zwischen 0,1 und 100 g, vorzugsweise zwischen 1,0 und 10 g, insbesondere 4,5 bis 6 g. Die in Tetralin bei 120°C gemessenen Grenzviskositäten liegen im allgemeinen zwischen 0,6 und 1,5 dl/g. Die nach der Methode der Lichtstreuung ermittelten Molekulargewichte liegen vorzugsweise zwischen 50 000 und etwa 1 Million. Die nach der Beziehung $M_w/M_n$ — 1 definierte Uneinheitlichkeit U (G. Schulz, Z. phys. Chem. (B) 43 (1939) Seiten 25—34) liegt im Bereich von 1,6 bis 30. Diese Copolymerisate sind bevorzugt in heißen Kohlenwasserstoffen löslich.

Die beispielsweise nach dem Verfahren der Lösungs- oder Emulsionspolymerisation hergestellten Ethylen-Vinylacetat-Copolymerisate, die 30 bis 98 Gew.-% Vinylacetat, vorzugsweise 60 bis 80 Gew.-% Vinylacetat enthalten, besitzen Schmelzindexwerte (190°C — 2,16 kp), die größer als 100 g sein können, vorzugsweise liegt der Schmelzindexbereich jedoch unter 15 g, insbesondere zwischen 0,5 und 5 g. Die mittels Lichtstreuung gemessenen Molekulargewichte liegen vorzugsweise zwischen 40 000 und einer Million. Die Uneinheitlichkeit U beträgt 1 bis 6. Die Copolymerisate sind löslich in Kohlenwasserstoffen und Alkoholen und besitzen vorzugsweise Grenzviskositäten in Toluol zwischen 0,5 und 2,5 dl/g.

Die Ethylen-Vinylacetat-Copolymerisate können, falls gewünscht, ganz oder teilweise verseift sein.

Der bekannte nachteilige Effekt der sogenannten Weichmacherwanderung tritt bei den Polymermischungen aus organischen Celluloseestern und Ethylen-Vinylacetat-Copolymerisaten nicht auf, da bei der Verarbeitung der Mischungen der Zusatz von Weichmachern und ähnlichen Hilfsmitteln nicht eforderlich ist. Dadurch sind solche Mischungen besonders gut geeignet für Anwendungen, bei denen es auf physiologische Verträglichkeit ankommt.

Die Herstellung der Mischungen aus organischen Celluloseestern und Ethylen-Vinylacetat-Copolymerisaten erfolgt durch intensives Vermischen der Komponenten. Es können hierzu alle bekannten Mischverfahren benutzt werden wie z.B. das Mischen auf Walzwerken oder in Schnekkenextrudern. Die erfindungsgemäß zu verwendenden Mischungen aus organischen Celluloseestern und Ethylen-Vinylacetat-Copolymerisaten lassen sich problemlos auf bekannten Extrudern und Spritzgußmaschinen kontinuierlich und diskontinuierlich verarbeiten und zeigen dabei eine gute Fließfähigkeit.

Sie können direkt zu Linsenkörpern verspritzt werden. Man kann auch zunächst erst einmal Rohlinge herstellen und diese spanabhebend bearbeiten und anschließend polieren. Die erhältlichen harten bis halbharten kontaktoptischen Materialien besitzen ein Wasseraufnahmevermögen von etwa 2%. Der Sauerstoffdurchgangskoeffizient Pg beträgt bei 25°C $2,01 \cdot 10^{-4}$ / ul·cm / cm²·h·mmHg (s. M. F. Refojo et al., Contact Lens, Oct./Dec. 1977, S.27).

Beispiel

Eine Polymermischung bestehend aus 10 Gew.-Teilen Ethylen-Vinylacetat-Copolymerisat (Vinylgehalt: 70 Gew.-%, Grenz- Viskosität: 1,5 dl/g, gemessen bei 25°C in THF) und 90 Gew.-Teilen Celluloseacetobutyrat (Hydroxylgehalt: 1,7 Gew.-%, Buttersäuregehalt: 46,5 Gew.-%, Essigsäuregehalt: 20 Gew.-%) wird in einem Entgasungsextruder bei 225°C entgast und zu einem Zylindergranulat verarbeitet. Das Granulat wird auf einer Spritzgußmaschine bei 200°C aufgeschmolzen und zu Rundstäben der Abmessung 20 × 2 cm verspritzt. Aus den Rundstäben werden mit einer Diamantscheibe unter Wasser 2,3 mm dicke Plättchen geschnitten. Aus den Plättchen werden auf einer Drehbank mit einem Diamantschneider bei 3000 U/Min. Kontaktlinsen gedreht. Die Kontaktlinse wird auf einen mit Seide bespannten Massingknopf aufgezogen und bei 300 U/Min. mit Polierpaste in Terpentin poliert. Die Linse wird in kochendem Wasser sterilisiert und 1 Woche in physiologischer Kochsalzlösung aufbewahrt, wobei die Lösung mehrmals geweschselt wird. Vor dem Einsetzen in das Auge eines Kaninchens wird die Linse zwei Tage in einem handelsüblichen Aufbewahrungsmittel für hydrophile Kontaktlinsen aufbewahrt, das 0,001% Konservierungsmittel enthält. Das Kaninchenauge wird täglich untersucht. Nach 30 Tagen ununterbrochenen Tragens trat noch keine Vascularisation im Bereich der Linse auf, die Bindehaut war reizfrei.

Eine auf das andere Auge des Kaninchens aufgesetzte harte Linse aus Polymethylmethacrylat zeigte dagegen nach 30 Tagen eine leichte Epitheltrübung im peripheren Bereich der Linse und eine feine Vascularisation im unteren Augenbereich.

## Patentanspruch

Kontaktlinsen und Kontaktschalen aus weichmacherfreien Polymermischung bestehend aus

1) 99 bis 70 Gewichtsprozent eines Celluloseesters von einer oder mehreren aliphatischen Carbonsäuren, und

2) 1 bis 30 Gewichtsprozent eines Ethylen-Vinylacetat-Copolymerisates mit 30 bis 98 Gewichtsprozent eingebautem Vinylacetat.

## Claim

Contact lenses and scleral lenses formed of plasticizer-free polymer mixtures consisting of

1) 99 to 70% by weight of a cellulose ester of one or more aliphatic carboxylic acids, and

2) 1 to 30% by weight of an ethylene/vinyl acetate copolymer containing 30 to 98% by weight of incorporated vinyl acetate.

## Revendication

Lentilles de contact et lentilles sclérales en des mélanges de polymères exempts de plastifiants, consistant en

1) 99 à 70% en poids d'un ester de cellulose d'un ou plusieurs acides carboxyliques aliphatiques et en

2) 1 à 30% en poids d'un copolymère éthylène-acétate de vinyle ayant 30 à 98% en poids d'acétate de vinyle incorporé.